Europäisches Patentamt

European Patent Office

Office européen des brevets

(11) Veröffentlichungsnummer: **0 286 636**
**B1**

(12) **EUROPÄISCHE PATENTSCHRIFT**

(45) Veröffentlichungstag der Patentschrift: **18.04.90**

(21) Anmeldenummer: **86906790.0**

(22) Anmeldetag: **03.12.86**

(86) Internationale Anmeldenummer:
**PCT/DE86/00495**

(87) Internationale Veröffentlichungsnummer:
**WO 87/03508 18.06.87 Gazette 87/13**

(51) Int. Cl.$^5$: **B 01 J 8/40, F 26 B 3/08,**
**F 26 B 7/00, C 04 B 11/036,**
**C 04 B 11/26**

(54) **VERFAHREN UND VORRICHTUNG ZUM TROCKEN UND/ODER BRENNEN PULVERFÖRMIGER STOFFE.**

(30) Priorität: **04.12.85 DE 3542904**

(43) Veröffentlichungstag der Anmeldung:
**19.10.88 Patentblatt 88/42**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**DE-A-3 337 770**
**DE-C- 273 025**
**FR-A- 939 805**
**FR-A-2 372 655**
**GB-A- 392 780**
**GB-A-2 026 668**
**US-A-3 063 848**
**US-A-4 112 836**

(73) Patentinhaber: **RODDEWIG, Dieter**
**Am Butterberg 35**
**D-3360 Osterode am Harz (DE)**

(72) Erfinder: **RODDEWIG, Dieter**
**Am Butterberg 35**
**D-3360 Osterode am Harz (DE)**

(74) Vertreter: **Becker, Thomas, Dr., Dipl.-Ing. et al**
**Becker, Müller & Pust Patentanwälte**
**Eisenhüttenstrasse 2**
**D-4030 Ratingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Verfahren und eine Vorrichtung zum Trocknen und/oder Calcinieren von pulverförmigen Stoffen.

Auf den verschiedensten Gebieten der Technik müssen pulverförmige Stoffe getrocknet und/oder gebrannt (calciniert) werden, um Oberflächenfeuchtigkeit und/oder chemisch gebundenes Wasser zu entfernen und die Stoffe so einer weiteren Verarbeitung zugänglich zu machen.

Beispielsweise in der Gipstechnologie ist es notwendig, den über oder unter Tage gewonnenen Naturgips, der eine Bergfeuchte von ca. ein bis drei Gewichtsprozent aufweist, zu trocknen, um zunächst die adsorptiv gebundene Oberflächenfeuchtigkeit zu beseitigen und, anschließend zu brennen, wobei sich in Abhängigkeit von der Temperatur und der Zeit unterschiedliche Calciumsulfat-Hydrat-Modifikationen bilden.

Zur Trocknung und Calcinierung von Naturgipsen sind zahlreiche Verfahren und Vorrichtungen bekannt.

Probleme ergeben sich dagegen bei der Behandlung von besonders feinen Pulvermaterialien, hier insbesondere von Calciumsulfat-Produkten, bei der Behandlung von synthetischen Calciumsulfat-Materialien, wie den sogenannten Chemie- und Rauchgasgipsen. Bei letzterem handelt es sich um das Endprodukt einer Entschwefelung, zum Beispiel im Naßwaschverfahren mit Kalkstein ($CaCO_3$) oder mit Kalkhydrat ($Ca(OH)_2$) oder mit Calciumoxid ($CaO$). Ein solcher Rauchgasgips stellt ein Calciumsulfat-Dihydrat ($CaSO_4.2H_2O$) dar.

Derartige Rauchgasgipse unterscheiden sich von Naturgipsen in vielfältiger Hinsicht. Schon im Rohzustand ist der Rauchgasgips sehr viel feinkristalliner und zeigt durch das Herstellungsverfahren Teilchengrößen von zum Teil weit unter $50\mu m$. Auch der Kristallhabitus weicht von dem der natürlichen Calciumsulfatdihydrate ab. Darüberhinaus liegt die adsorptiv gebundene Oberflächenfeuchtigkeit des Rauchgasgipses mit ca. zehn Gewichtsprozent deutlich über der von Naturgipsen, (ca. ein bis drei Gewichtsprozent).

Es ist offensichtlich, daß derartige Produkte nicht mit konventionellen Trocknungs- und/oder Calcinier- verfahren und -vorrichtungen behandelt werden können. Schon der Transport des feinteiligen und feuchten Rauchgasgipses bereitet Schwierigkeiten durch unerwünschte "Klumpenbildung", die Förderaggregate und Transporteinrichtungen schnell verstopfen laßt. Die feuchten Rauchgasgipse werden deshalb vor der Lieferung an die Abnehmer (Entsorger) getrocknet, weil vorhandene Förder- und Brennaggregate mit feuchtem Material nicht störungsfrei arbeiten können (Zement-Kalk-Gips 5 (1983), 271, 273).

Bereits das Trocknen bereitet aber Schwierigkeiten auf Grund der geschilderten Eigenschaften der synthetischen Calciumsulfate-Produkte und es wird hilfsweise auf relativ aufwendige Trockner wie Schleudertrockner zurückgegriffen, die zudem nur eine teilweise Entwässwasserung ermöglichen.

Danach ist der Transport zwar etwas vereinfacht, die beschriebenen technischen Schwierigkeiten aber noch nicht beseitigt Darüberhinaus läßt sich das nach wie vor äußerst feinteilige Material in konventionellen Brennaggregaten ohne weitere Vorbehandlung nicht calcinieren.

Bisher bekannt gewordene Modelle (Zement-Kalk-Gips a.a.O.; Umwelt 6 (1983), 435) schlagen eine Agglomerierung und anschließende Vermahlung zur Verbesserung des ungünstigen Kornaufbaus und der Teilchenstruktur sowie Beeinflussung der rheologischen Eigenschaften vor. Die Agglomerierung soll dabei mit Brikettpressen oder Pelletisieranlagen erfolgen, die zu einer Kornvergröberung führen.

Das nach wie vor feuchte Material muß dabei also zusätzlich behandelt werden. Es sind zusätzliche Aggregate erforderlich. Diese sind nicht nur teuer, sondern verteuern auch die Aufbereitung der genannten Produkte erheblich und sind darüber hinaus störanfällig.

Ein weiterer Vorschlag (Umwelt a.a.O.) sieht die Herstellung von stückigem Gut durch Kollerstrangpressen vor, womit jedoch die gleichen Nachteile verbunden sind.

Den bekannten Aufbereitungstechniken derartiger feinteiliger pulverförmiger Stoffe haftet für den genannten Anwendungsbereich der weitere Nachteil an, daß die, Kompaktiereinrichtungen schon aus Kostengründen nicht jeder Rauchgasentschwefelungsanlage nachgeschaltet werden können, um ein zum Zement- oder Gipswerk transportfähiges Gut herzustellen.

Andere Lösungen sind bisher nicht bekannt geworden, obwohl ein dringendes diesbezügliches Bedürfnis besteht. Nach der vor kurzem verabschiedeten Verordnung über Großfeuerungsanlagen aufgrund des Bundesimmissionsschutzgesetzes müssen bis 1.1.1988 Kraftwerke mit Entschwefelungsanlagen ausgerüstet und alte Anlagen entsprechend nachgerüstet sein, wodurch ein erheblicher Anfall an den genannten Rauchgasgipsen entsteht.

Aus der DE—OS 31 29 878 ist ein Verfahren zur Herstellung von Gips aus dem Entschwefelungsschlamm von Rauchgasentschwefelungsanlagen bekannt, wobei der Entschwefelungsschlamm als Schichtkuchen calciniert wird. Auch bei diesem Verfahren wird das feinteilige Ausgangsmaterial vor dem Calcinieren in eine neue Form, hier Schichtkuchen, gebracht. Ein Schichtkuchen weist ein größeres Volumen als Pellets oder Briketts auf. Dadurch wird eine gleichmäßige und gezielte Calcinierung noch schwieriger.

Der vorliegenden Erfindung liegt die Aufgabe zugrunde, ein Verfahren und eine Vorrichtung zum Trocknen und/oder Brennen von pulverförmigen Calciumsulfathydratprodukten anzubieten, mit denen die Aufbereitung insbesondere feinteiliger pulverförmiger Materialien mit einem überwiegenden Kornanteil unter $100\mu m$ leichter und unter vermindertem apparativem und Energieaufwand erfolgen kann. Dabei soll vorzugsweise auch eine Möglichkeit geschaffen werden, kontinuierlich und/oder energiesparend zu arbeiten.

Die Erfindung steht unter der Erkenntnis, daß es entgegen den bisher bekannt gewordenen Lösungsvorschlägen- nicht notwendig ist, die bei der Trocknung und/oder dem Brennen pulverförmiger Materialien besonders hoher Feinheit (hierunter werden erfindungsgemäß pulverförmige Stoffe mit einem überwiegenden Anteil an Teilchen mit einer Größe unter 100μm, insbesondere Pulver mit einem überwiegenden Anteil an Teilchen mit einer Korngröße unter 50μm verstanden) eingangs beschriebenen Probleme dadurch zu lösen, daß die pulverförmigen Stoffe zunächst über ausgewählte Trocknungsaggregate vorgetrocknet und anschließend zur Haupttrocknung beziehungsweise zum Brennen kompaktiert werden, sondern daß derartige Materialien unmittelbar bei entsprechender Behandlung einem Trocknungs- und/oder Brennaggregat zugeführt werden können. Dies gilt insbesondere für pulverförmige Stoffe der genannten Art mit einem hohen Gehalt an adsorptiv gebundenem Wasser, beispielsweise synthetischen Calciumsulfat-Hydratprodukten aus der Rauchgasentschwefelung von Kraftwerken.

Es hat sich völlig überraschend gezeigt, daß man derartige Materialien ohne vorhergehende zusätzliche Aufbereitungsschritte, wie Vortrocknung und/oder Agglomerierung unmittelbar einem mit einer Aufgabe- und Entnahmeeinrichtung versehenen beheizten Behandlungsraum aufgeben kann, wenn dieser durch einen im wesentlichen horizontal verlaufenden. Vibrationsoder Schwingboden, der von unten von Heißluft oder Heißgas durchströmbar ist, ausgebildet ist und von der Entnahmeeinrichtung eine Transportverbindung zur zumindest teilweisen Überführung des Materialstroms zurück zur Aufgabeeinrichtung des ersten Bodens verläuft.

Die Zuführung der genannten pulverförmigen feinteiligen Materialien kann in dem Zustand erfolgen, wie das Material am Einsatzort vorliegt, bei sogenannten Rauchgasgipsen also zum Beispiel in Form eines mehr oder weniger wasserreichen Schlamms. Es hat sich gezeigt, daß durch die Führung von Heißgasen (Heißluft) durch den entsprechend permeabel ausgebildeten Boden (der damit als Heizfläche wirkt) des Behandlungsgefäßes zu Beginn eine zwangsweise Auflockerung der gegebenenfalls agglomerierten Feinstteilchen erreicht werden kann, wenn gleichzeitig der gasdurchströmte Boden als Vibrations- oder Schwingtisch ausgebildet ist, das heißt eine kontinuierliche Schwingbeziehungsweise Vibrationsbewegung mit möglichst geringer Amplitude ausführt. Es wird dann bei entsprechender Einstellung der Schwingungsamplitude, der Größe, Form und Zahl der Durchgangsöffnungen im Boden und/oder der Geschwindigkeit des durchtretenden Heißgases sowie dessen Temperatur eine mehr oder weniger starke "Fluidisierung" des zu behandelnden Materials erreicht, so daß dieses über den Boden transportiert wird. Der Transport des Materials von einer Aufgabeeinrichtung zu einer in der Regel gegenüberliegenden Entnahmeeinrichtung erfolgt dabei durch eine entsprechend gezielt eingestellte Austrittsrichtung der Heißgase aus dem Zwischenboden und/oder die Bewegungsrichtung des Vibrationsoder Schwingtisches.

Dementsprechend sehen vorteilhafte Ausbildungsformen der Erfindung vor, daß der Boden auf einer evolventenartigen Bewegungsbahn pulsierend bewegbar ist, wobei die längere Evolventenflanke dann die Transportrichtung des Materials angibt.

In gleicher Weise ist eine Beeinflussung der Transportrichtung und -geschwindigkeit auch durch die entsprechende Gestaltung der Heißgasaustrittsöffnungen des Bodens möglich. Wird der Zwischenboden aus einem Metallblech, vorzugsweise einem Stahlblech hergestellt, so läßt sich eine gezielte Strömungsrichtung einfach dadurch erzielen, daß die Öffnungen als in Richtung auf den oberen Abschnitt des Behandlungsraums ausgedrückte und lediglich in Transportrichtung geöffnete Abschnitte gestaltet sind, wobei die nach oben ausgedrückten Teile des Metallbleches zur Umlenkung der Heißluft/des Heißgases dienen. Die Herstellung des Zwischenbodens erfolgt dabei also nicht durch einfaches Durchstanzen, sondern Ausdrücken, ähnlich wie bei einer Reibe. Vorzugsweise sind die Durchtrittsöffnungen sehr klein und in sehr dichtem Abstand angeordnet, um den Fluidisierungseffekt des darübergeführten Materials zu begünstigen.

Ebenso lassen sich bei der Herstellung auch Poren und Öffnungen von Sintermetallwerkstoffen, die gleichfalls erfindungsgemäß als Bodenmaterial vorgeschlagen werden, in gezielter Ausrichtung herstellen. Gleiches gilt für die insbesondere im Temperaturbereich über 600°C vorgeschlagenen porösen keramischen Werkstoffe.

Eine weitere vorteilhafte Ausgestaltungsform der Erfindung sieht vor, daß der Boden in seinem Neigungswinkel veränderbar ist, das heißt beispielsweise auch in Transportrichtung ansteigend ausgebildet sein kann. Vorzugsweise ist der Neigungswinkel stufenlos einstellbar, so daß insbesondere in Kombination mit der Strömungsgeschwindigkeit der Heißgase so auch eine Steuerung/Regelung der Transportgeschwindigkeit des darübergeführten Materials möglich ist.

Zur Bewegung des Zwischenbodens sehen zwei alternative Ausführungsvarianten der Erfindung vor, entsprechende Schwing- oder Vibrationsaggregate entweder unmittelbar am Boden anzuordnen, oder aber den Zwangsagitator am Behandlungsraum zu montieren, so daß dieser insgesamt der beschriebenen Vibration unterworfen wird, was den Vorteil hat, daß gegebenenfalls an den Wänden des Behandlungsraums anhaftendes Gut wieder abgeschüttelt wird. In beiden Fällen ist der Vibrations- oder Schwingtisch und/oder der Behandlungsraum federnd gelagert.

Durch die Möglichkeit des Einsatzes keramischer Werkstoffe für den Boden ist es möglich, die erfindungsgemäße Vorrichtung auch im Hochtemperaturbereich über 1000°C einzusetzen. Vorzugsweise wird dann auch der Behandlungsraum insgesamt mit einer feuerfesten Auskleidung, zum Beispiel aus geeigneten keramischen Fasermaterialien, ausgekleidet.

In einer vorteilhaften Weitergestaltung der Erfindung ist vorgesehen, daß zur Beheizung und Luftführung unterhalb des Transportbodens Brenner angeordnet werden. Es hat sich gezeigt, daß die Geschwindigkeit der aus den Brennern austretenden Brenngase ausreicht, eine Gasführung durch den gasdurchlässigen Boden in der gewünschten Weise zu erreichen. In Abhängigkeit von der gewünschten Temperatur und Größe der Durchgangsöffnungen im Boden sind geeignete Brenner auszuwählen. Als geeignet haben sich unter anderem Hochdruckzerstäubungsbrenner, Injektorbrenner, aber auch drallstabilisierte Brenner erwiesen. Vorzugsweise sind die Brenner parallel zum Zwischenboden angeordnet, um eine Temperaturvergleichmäßigung über die Bodenfläche zu erreichen. Soweit notwendig, können zur Wärmeunterstützung auch im Bereich oberhalb des Zwischenbodens Brenner angeordnet werden.

In einer alternativen Ausführungsform der Erfindung ist vorgesehen, die Brenner außerhalb des Behandlungsraumes, das heißt unterhalb, vor korrespondierenden Öffnungen in der Grundplatte des Behandlungsraumes anzuordnen. So ist sichergestellt, daß keine Übertragung von Schwingungen vom Behandlungsraum auf die Brenner erfolgt. Gleichzeitig kann der Luftspalt zwischen Brenner und Wand des Behandlungsraumes zur Zuführung von Sekundärluft genutzt werden, wodurch eine Art Injektorwirkung entsteht. Selbstverständlich ist es auch möglich, Brenner und Behandlungsraum über eine entsprechende flexible Muffe miteinander gasdicht zu verbinden. Anstelle der Brennerbeheizung ist auch eine indirekte, zum Beispiel elektrische Beheizung (Mikrowellen) und Infrarotbeheizung möglich. Dann werden zusätzlich Ventilatoren zum Durchführen der Luft/des Gases durch den porösen Boden im Behandlungsraum angeordnet.

Erfindungsgemäß ist auch vorgesehen, den Behandlungsraum zwischen Aufgabe- und Entnahmeeinrichtung und damit in Transportrichtung des zu behandelnden Stoffes in verschiedene Zonen zu unterteilen. Dies geschieht in einer vorteilhaften Ausführungsform beispielsweise durch von der Decke des oberen Abschnittes des Behandlungsraums in Richtung auf den Zwischenboden verfahrbare Bleudeu, so daß einerseits gewährleistet ist, daß das Material ungehindert über den Boden fließen kann, andererseits aber auch entsprechend einer fortschreitenden Trocknung entlang des Transportweges Zonen unterschiedlicher Raumfeuchtigkeit gebildet werden können, wodurch die Effektivität der Vorrichtung insgesamt erhöht wird. Diese konstruktiven Maßnahmen entfalten insbesondere dann ihre Wirkung, wenn im oberen Abschnitt des Behandlungsraumes mindestens eine, vorzugsweise regelp und/oder steuerbare Absaugeinrichtung angeschlossen ist, so daß die mehr oder weniger feuchten und mit Feststoffteilchen mehr oder weniger angereicherten Abgase aus dem Behandlungsraum abgeführt werden können. Dabei wird der Wirkungsgrad der erfindungsgemäßen Vorrichtung weiter optimiert, wenn jede einzelne Zone innerhalb des Behandlungsraumes mit einer eigenen Absaugeinrichtung ausgestattet ist.

In einer konstruktiven Weiterbildung sieht die Erfindung auch vor, daß die an die einzelnen Absaugeinrichtungen angeschlossenen Transportleitungen in eine oder mehrere Entstaubungsanlage(n) geführt werden. Hier ist nicht nur eine Entstaubung der Abgase möglich, vielmehr kann die austretende Heißluft nach einer erfindungsgemäßen Weiterbildung einem mit dem oder den Brennern verbundenen Wärmetauscher zugeführt und der anfallende Staub zur Aufgabe- und/oder Entnahmeeinrichtung der Vorrichtung zurückgeführt werden.

Insbesondere durch die wahlweise Rückführung der aus der Entstaubungsanlage gewonnnen Feststoffe kann die Führung des Trocknungs- und/oder Brennprozesses in Abhängigkeit von dem jeweiligen Trocknungs- und/oder Calcinierungsgrad eingestellt werden.

Auch die Aufgabe beziehungsweise Entnahme der zu behandelnden Materialien kann nach einer vorteilhaften Weiterentwicklung der Erfindung der neuen Trocknungs- und/oder Brennvorrichtung angepaßt werden, wozu die Ausbildung der entsprechenden Transportmittel als Vibrations- und/oder Luftförderrinnen vorgeschlagen wird. Dabei ist es besonders vorteilhaft, wenn die entsprechenden Transportmittel analog der vorstehend beschriebenen Vorrichtung mit einem gasdurchlässigen Transportboden ausgestaltet sind, durch den von unten Heißgase geführt werden. Hierdurch kann eine gewisse Auflockerung und Vortrocknung bereits bei der Aufgabe in die Vorrichtung erfolgen.

Vorzugsweise sind Aufgabe- und Entnahmeeinrichtungen sowie die beschriebenen sonstigen Anschlüsse an die Vorrichtung staub- und/oder gasdicht mit dem Behandlungsraum verbunden.

Die erfindungsgemäße Einrichtung kann sowohl als reiner Trockner wie ausschließlich zum Brennen der Materialien eingesetzt werden. Entsprechend den notwendigen Behandlungstemperaturen werden bei ansonsten gleicher Konstruktion lediglich die Materialien für den Behandlungsraum und seine Einbauten — wie vorstehend beschrieben — angepaßt.

Zum Trocknen und/oder Brennen der Materialien kann der Materialstrom auch mehrfach durch ein und dieselbe Vorrichtung geführt werden, wobei dann zumindest ein Teilstrom von der Entnahmeeinrichtung zur Aufgabeeinrichtung zurückgeführt wird.

Es hat sich insbesondere beim mehrmaligen Durchleiten, desselben Materialstromes durch die erfindungsgemäße Vorrichtung völlig überraschend gezeigt, daß zwar zunächst eine Auflockerung des Materials bei der erfindungsgemäßen Verfahrensführung und damit eine besonders gleichmäßige und intensive Trocknung/Brennen erfolgt, daß aber mit zunehmender Verweildauer der Teilchen in der erfindungsgemäßen Vorrichtung wieder eine Agglomerierung der feinen Teilchen zu größeren Verbänden erfolgt und damit eine Art Selbstpelletisierung. Dieses Phänomen ist in seinen Ursachen noch nicht vollständig erklärbar. Versuche haben aber gezeigt, daß insbesondere die Oberflächenspannung der Teilchen und ihre Affinität zueinander inbesondere bei längeren Verweilzeiten in der erfindungsgemäßen Vorrichtung oder dem mehrmaligen Durchführen so erheblich sinkt beziehungsweise steigt, daß es zu der beschriebenen selbsttätigen Agglomeration kommt.

Die Erfindung bietet damit verschiedene Trocknungs- und/oder Brennverfahren und zugehörige Vorrichtungen an.

Zum einen ist es möglich, die erfindungsgemäße Vorrichtung ausschließlich zum Trocknen der genannten Materialien einzusetzen, wobei die Vorrichtung aufgrund ihrer Kompaktheit ohne weiteres unmittelbar für den Fall der Trocknung von Rauchgasgipsen einer Entschwefelungsanlage nachgeschaltet werden kann. Die Trocknung kann dann entweder so geführt werden, daß insbesondere bei einmaligem und/oder relativ kurzzeitigem Durchleiten des Materials durch den Trockner ein feinpulvriges Material ausgetragen wird, das sich von dem aufgegebenen Material im wesentlichen lediglich durch einen verminderten Gehalt an freiem Wasser unterscheidet und damit ein Transport, zum Beispiel in Silofahrzeugen, möglich ist.

Das so getrocknete Material kann dann mit einem im wesentlichen baugleichen oder anderen bekannten Brennaggregaten calciniert werden.

Es ist aber auch möglich, die Trocknung in der geschilderten Weise verzögert zu führen, um dem Trockner schließlich ein pelletisiertes Produkt entnehmen zu können, das dann auch konventionellen Brennaggregaten zugeführt werden kann.

In jedem Fall ist bei geringstem Aufwand nicht nur eine unmittelbare Trocknung "vor Ort" im Kraftwerk möglich, sondern das zu trocknende Produkt kann individuell bezüglich seines Habitus eingestellt werden. Wird ein getrocknetes Material in Pelletform gewünscht, so ist dies ohne die im Stand der Technik beschriebenen aufwendigen Vortrocknungs- und Kompaktierungseinrichtungen, die zudem störanfällig sind, möglich.

Die Erfindung bietet aber auch die Möglichkeit, das Material in ein und derselben Vorrichtung erst zu trocknen und dann durch Steigerung der Temperatur (über die Brenner) und nochmaliges Durchführen des Materials durch die Vorrichtung zu calcinieren.

In einer vorteilhaften Ausgestaltung der Erfindung ist für eine derartige Verfahrensführung vorgesehen, mindestens zwei der genannten Vorrichtungen miteinander zu verbinden, wobei zwischen Entnahmeeinrichtung einer Vorrichtung und Aufgabeeinrichtung einer daran angeschlossenen Vorrichtung eine Transportverbindung für das zu behandelnde Material besteht. Der pulverförmige Stoff wird dabei von einer ersten Vorrichtung in eine zweite Vorrichtung übergeben, bei der eine höhere Temperatur im Behandlungsraum eingestellt wird. Je nach gewünschtem Trocknungs- und/oder Calcinierungsgrad, können die Temperaturen und die Transportgeschwindigkeit des Gutes durch die Behandlungsräume eingestellt werden. Die Transportgeschwindigkeit wird dabei vorzugsweise durch eine entsprechende Anstellung des gasdurchlässigen Bodens erreicht.

Es ist offensichtlich, daß durch Verbindung mehrerer Vorrichtungen eine erhöhte Flexibilität bei der Trocknung beziehungsweise beim Brennen erreichbar ist, indem — wie es eine vorteilhafte Ausführungsform der Erfindung vorsieht — zum Beispiel auch Teilströme entsprechend einem definierten Calcinierungsgrad aus einzelnen Vorrichtungsteilen entlang des Transportweges abgezogen werden.

So lassen sich zum Beispiel bei der Calcinierung von Gipsen am Austrag der ersten Vorrichtung ein weitestgehend von adsorptiv gebundenem Wasser befreites Calciumsulfat-Dihydrat, am Ende einer weiteren angeschlossenen Vorrichtung ein Calciumsulfat-Dihydrat oder Calciumsulfat-Beta-Halbhydrat entnehmen und bei entsprechender apparativer Anordnung kann der Pyroprozeß bis zum Erhalt von Anhydrit II und darüber hinaus geführt werden.

Dabei ist es besonders vorteilhaft, wenn die einzelnen Vorrichtungen stufenförmig zueinander angeordnet sind, wodurch der Transport der pulverförmigen Materialien von einer Vorrichtung zur nächsten erleichtert wird. In gleichem Maße ist aber auch eine Anordnung der Vorrichtungen untereinander möglich.

Ferner können Verbindungsleitungen zwischen den einzelnen Vorrichtungen zur Rückführung beziehungsweise Einleitung von Abgaben einer Vorrichtung in eine andere vorgesehen sein.

Die erfindungsgemäße Vorrichtung ist sowohl einzeln als auch bei einer Kombination mehrerer Anlagen dem jeweils zu trocknenden/brennenden Produkt individuell anpaßbar, und zwar unter anderem durch:

Auswahl der Brenner, Brenntemperatur, Einstellung der Vibrations-/Schwingbewegung des Zwischenbodens, konstruktive Gestaltung des Vibrations-/Schwingbodens, Anordnung verschiedener Zwischenböden zueinander, Einstellung der Durchgangsöffnungen/Poren des Zwischenbodens, Anstellwinkel des Zwischenbodens, Einstellung der Amplitude des Vibrations-/Schwingbodens, Abluftführung, Entstaubung und Rückführung von Feststoff und Gas, Teilung der Behandlungsräume in Zonen in Transportrichtung.

Die erfindungsgemäße Vorrichtung bietet weiterhin den Vorteil, daß mit sehr geringen Energiemengen hohe Durchsatzleistungen erzielt werden können. Die z.B. eingesetzten Vibromotoren benötigen nur eine sehr geringe Antriebsleistung, um die gewünschten Schwingungen auf den gasdurchströmten Boden zu übertragen. Vorzugsweise ist der Vibrator frequenzregelbar, um die Schwingungsamplitude individuell einstellbar zu machen.

Durch die mit der erfindungsgemäßen Vorrichtung erzielbare Fluidisierung des feinen Pulvermaterials erfolgt auch eine optimale Wärmeübertragung auf das zu behandelnde Gut und damit eine Optimierung des Trocknungsbeziehungsweise Brennprozesses im Sinne einer möglichst geringen Energiezufuhr, wobei die pro Kilogramm Trocknungs-/Brenngut notwendige Wärmemenge durch die beschriebenen Rückführungen der Abgase und Leitung in Wärmetauscher zur Vorwärmung der Verbrennungsluft für die Brenner weiter optimiert werden kann.

Weitere Merkmale der Erfindung sind durch die Patentansprüche sowie die übrigen Beschreibungsunterlagen gekennzeichnet. Eine besonders hervorzuhebende alternative Gestaltung einer erfindungsgemäßen Vorrichtung/Anlage sieht vor, innerhalb eines einzigen Behandlungsraums mehrere Luft-/Gasdurchströmbare Böden im Abstand übereinander anzuordnen und das Material dann mehrfach über einen und/oder unterschiedliche Böden zu führen, wobei die Vorrichtung auch mit mehreren Aufgabe- und Entnahmeeinrichtungen sowie entsprechenden Rückführbändern ausgerüstet ist. Bei einer zentralen Beheizung von unten können dann zwischen den einzelnen Böden unterschiedliche Temperaturbedingungen entsprechend unterschiedlichen Trocknungs-/Calcinierungsgraden des Materials eingestellt werden. Selbstverständlich können zwischen den einzelnen Böden auch zusätzliche Brennaggregate und/oder Absaugeinrichtungen vorgesehen sein. Bei der vorstehend beschriebenen Ausführungsform läßt sich eine besonders Platz- und Energiesparende Kompaktbauweise realisieren.

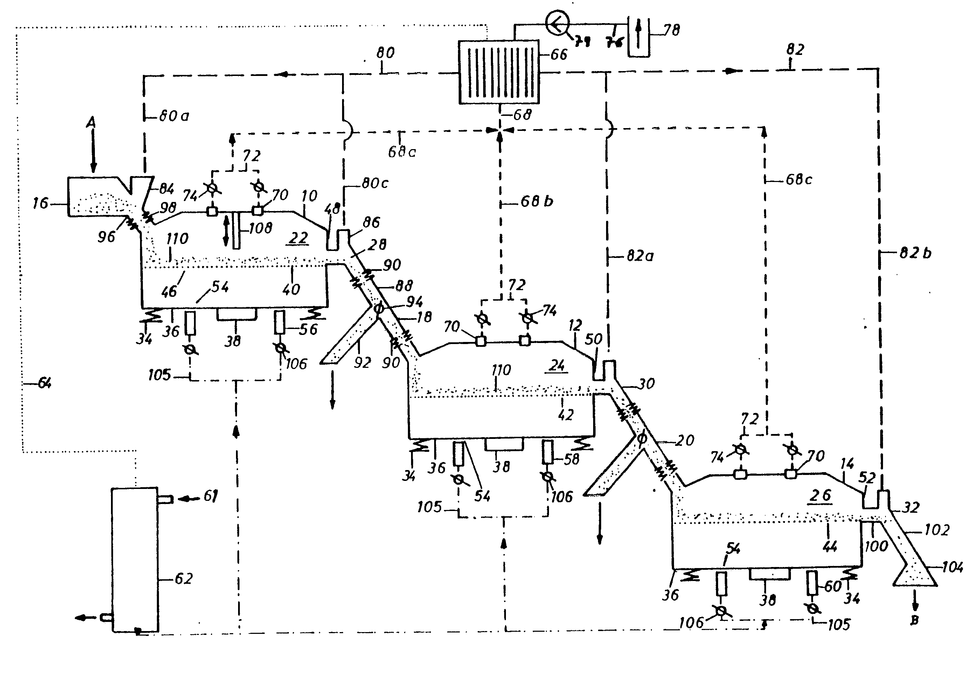

Die Erfindung wird nachstehend anhand einer Zeichnung näher erläutert. Die Zeichnung zeigt dabei eine Anlage, die aus mehreren erfindungsgemäßen Vorrichtungen aufgebaut ist, die stufenförmig hintereinander und miteinander verbunden angeordnet sind. Die Darstellung ist weitestgehend schematisch und wird sowohl in ihrem konstruktiven Aufbau als auch bezüglich der Verfahrensführung des durchgeleiteten Materials nachstehend näher erläutert.

Die erfindungsgemäße Anlage dient zum Trocknen und Calcinieren von bei der Rauchgasentschwefelung anfallendem sogenannten Rauchgasgips. Die Anlage besteht aus drei Vorrichtungsteilen 10, 12, 14 von im wesentlichen gleichem Aufbau.

Jede der Vorrichtungen 10, 12, 14 weist eine Aufgabeeinrichtung 16, 18, 20, einen Wärmebehandlungsraum 22, 24, 26 sowie eine Entnahmeeinrichtung 28, 30, 32 auf. Die Behandlungsräume 22, 24, 26 zeigen eine im wesentlichen quaderförmige Gestalt und sind federnd und/oder gedämpft gelagert. (In der Zeichnung sind zwei von vier derartigen Schwingungselementen 34 pro Behandlungsraum 22, 24, 26 dargestellt, z.B. Silentblöcke).

An der unteren Grundplatte 36 der Behandlungsraume 22, 24, 26 ist jeweils etwa mittig ein Zwangsagitator 38 befestigt. Hierbei handelt es sich um Vibrationsrüttler, die hydraulisch, elektrisch oder pneumatisch angetrieben sein können.

Diese Vibromotoren 38 sind vorzugsweise frequenzregelbar, um die Schwingungsamplitude des jeweiligen Behandlungsraumes 22, 24, 26 einstellbar zu gestalten.

Etwa auf der halben Höhe jedes Behandlungsraumes 22, 24, 26 sind in im wesentlichen horizontaler Ausrichtung (Zwischen) Böden 40, 42, 44 angeordnet. Die Böden 40, 42, 44 sind bei der dargestellten Ausführungsform fest mit dem jeweiligen Behandlungsraum 22, 24, 26 verbunden, so daß die vom Zwangsagitator 38 ausgehenden Schwingungen unmittelbar auf den jeweiligen Boden 40, 42, 44 übertragen werden.

Es ist aber auch möglich, den Zwangsagitator 38 nicht am Behandlungsraum 22, 24, 26 anzuordnen, sondern direkt mit dem Zwischenboden 40, 42, 44 zu verbinden, der dann federnd, beispielsweise auf einem entsprechenden Schwingungselement im Behandlungsraum 22, 24, 26 angeordnet ist.

Der Boden 40 des Behandlungsraumes 22 ist aus einem einfachen Kesselblech (rostfreier Stahl) hergestellt. Er ist charakterisiert durch eine Vielzahl kleinster Durchgangsöffnungen (nur schematisch mit dem Bezugszeichen 46 dargestellt). Während der Zwischenboden selbst eine Größe von circa 3 × 10 Metern aufweist, beträgt der Durchmesser der Durchtrittsöffnungen beispielhaft circa 10 bis 50µm. Die einzelnen Öffnungen sind durch ein Ausdrücken der entsprechenden Blechteile nach oben gebildet, wobei eine jeweils in Richtung auf die rückseitige Behälterwand 48 offene Viertelkugel-Form entsteht. Vorzugsweise sind sämtliche Durchgangsöffnungen 46 in der gleichen Weise gestaltet.

Der Boden 42 ist aus einem pulvermetallurgisch hergestellten Sintermetall gebildet. Sinterwerkstoffe werden aus Metallpulvern oder -granalien mit Teilchengrößen von 0,5 µm bis 1.000 µm und/oder aus Metallfasern ähnlicher Durchmesser hergestellt. Über die Wahl des Formgebungs- und Sinterverfahrens können unterschiedliche Qualitäten eingestellt werden. Ferner sind auch rohstoffseitig verschiedene Alternativen möglich.

Im Vergleich zu den schmelzmetallurgisch hergestellten Werkstoffen ist die Porosität der die Pulvermetallurgie charakterisierende Parameter. So können Porositätswerte von bis zu neunzig Prozent für pulvermetallurgisch hergestellte Werkstoffe erreicht werden.

Selbst bei diesen Porositätswerten sind noch ausreichende Festigkeiten möglich. Je nach Einsatzbereich kann eine derartige Sintermetall-Zwischenplatte aber auch noch durch ein entsprechendes, beispielsweise wabenförmiges Stützelement gehalten werden. Die Lagerung entspricht im übrigen in ihren alternativen Ausführungsformen der der Bodenplatte 40. Vorzugsweise ist die Bodenplatte aus glatten, kugeligen Teilchen gleichen Durchmessers hergestellt. Als Materialien kommen sowohl rostfreier Stahl und Bronze, wie auch Nickel, Titan, Aluminium, Tantal sowie Sonderlegierungen in Frage, wobei die Auswahl des jeweiligen Werkstoffes auch von der einzustellenden Temperatur im Behandlungsraum 24 abhängt.

Aus diesen oder ähnlichen Materialien hergestellte gas/luftdurchlässige Flächenelemente weisen eine quasi polierte Oberfläche auf, die selbst bei mechanischer Auflage von Feststoffteilchen ein Anhaften ausschließt. Bei der Herstellung kann die Form der einzelnen Poren, insbesondere im Oberflächenbereich, eingestellt werden, so daß eine bestimmte Ausrichtung der Poren möglich ist. Im Ausführungsbeispiel sind die Poren an der Oberfläche des Bodens 42 mit einer Neigung zur vertikalen Achse in Richtung auf die rückwärtige Wand 50 ausgebildet.

Der Boden 44 des Behandlungsraumes 26 schließlich ist aus einem gesinterten keramischen Werkstoff hergestellt, der gleichfalls eine hohe Durchgangsporosität aufweist. Im Unterschied zum Boden 42 sind die Poren an der oberen Oberfläche hier jedoch nicht in Richtung auf die rückwärtige Wand 52 des Behandlungsraumes 26 gerichtet, sondern mit Neigung zur Vertikalen in Richtung auf die Aufgabeeinrichtung 20, also gegen den noch im einzelnen beschriebenen Materialstrom.

Soweit erforderlich, kann auch hier der feuerfeste Werkstoff durch eine Armierung oder Unterstützung mechanisch verstärkt werden. Die Lagerung entspricht wiederum der der Bodenplatte 40.

Die Grundplatte 36 der Behandlungsräume 22, 24, 26 weist im Abstand zueinander mehrere Öffnungen 54 auf, die in der Zeichnung nur schematisch angedeutet sind. Mit geringem Abstand (2 bis 5 mm) ist vor jeder Öffnung 54 ein Brenner 56, 58, 60 angeordnet, und zwar so, daß der zugehörige Heißgasstrom durch die jeweils korrespondierende Öffnung 54 in den Behandlungsraum 22 beziehungsweise 24 beziehungsweise 26 eintreten kann. Die Auswahl der Brenner erfolgt in Abhängigkeit von den jeweils einzustellenden Trocknungs- oder Brennbedingungen und -temperaturen.

Der zwischen Brenner und Grundplatte 36 vorhandene Raum dient unter anderem zur Ansaugung von Sekundärluft.

Die Brenner sind über Gasleitungen 105 an eine entsprechende Gasversorgung (in der Zeichnung schematisch mit dem Bezugszeichen 61 dargestellt) angeschlossen, wobei das Brenngasgemisch durch einen gemeinsamen Wärmetauscher 62 zuvor vorgewärmt wird.

Am eingangsseitigen Teil des Wärmetauschers 62 mündet auch eine Leitung 64 ein, die vom ausgangsseitigen Ende einer Entstaubungsanlage 66, zum Beispiel einem Elektrofilter, kommt.

Die Entstaubungsanlage 66 wiederum wird eingangsseitig beschickt von einer Zuführleitung 68, in die drei Teilströme 68a, b, c einmünden, die von den Behandlungsräumen 22, 24 beziehungsweise 26 aus verlaufen.

In der oberen Hälfte jedes Behandlungsraumes 22, 24, 26 sind mehrere Absaugeinrichtungen 70 (in der Zeichnung sind jeweils nur zwei dargestellt), vorgesehen. Von diesen wird gegebenenfalls mit Feststoffteilchen beladene Abluft aus dem jeweiligen Behandlungsraum 22, 24, 26 abgezogen und der Zuführleitung 68 zur Einleitung in die Entstaubungsanlage 66 zugeführt.

Zur Steuerung/Regelung der Saugleistung und Menge sind unmittelbar hinter den Absaugeinrichtungen 70 in den zugehörigen Anschlußleitungen 72 Stellglieder 74 angeordnet, zum Beispiel einfache Drosselklappen.

Wie sich der Zeichnung entnehmen läßt verlaufen die, einzelnen Anschlußleitungen 72 nach den Stellgliedern 74 zusammen über die Zwischenleitungen 68a, b, c in die Zuführleitung 68 zur Entstaubungsanlage 66.

Von der Entstaubungsanlage 66 verläuft neben der Leitung 64 zum Wärmetauscher 62 auch noch eine Abgasleitung 76 zu einem Schornstein 78, mit einem zur Unterdruckerzeugung dazwischen geschalteten Ventilator 79.

Weiterhin verlaufen von der Entstaubungsanlage 66 zwei Rohrleitungen 80, 82, über die in der Entstaubungsanlage 66 abgeschiedene Feststoffteilchen zu den Vorrichtungen 10, 12, 14 zurückgeführt werden.

Wie die Zeichnung ohne weiteres erkennen läßt, ist die Rohrleitung 80 im Abstand zur Entstaubunganlage 66 geteilt ausgebildet, wobei eine Rückführung 80a in die Aufgabeeinrichtung 16 und eine Rückführung 80b in die Entnahmeeinrichtung 28 der Vorrichtung 10 mündet, die am Übergangsbereich entsprechende Aufnahmetrichter 84, 86 aufweist. Vorzugsweise ist der Übergangsbereich staubdicht ausgebildet, zum Beispiel über eine flexible Muffe (nicht dargestellt).

In analoger Ausbildung wie vorstehend anhand der Rohrleitung 80 beschrieben, ist auch die Rohrleitung 82 zweigeteilt ausgebildet und mündet mit einer Rückführung 82a auf gleiche Weise, wie vorstehend beschrieben, in die Entnahmeeinrichtung 30 der Vorrichtung 12 beziehungsweise mit der Rückführung 82b in die Entnahmeeinrichtung der Vorrichtung 14.

Die Entnahmeeinrichtung 28 der Vorrichtung 10 ist über eine geschlossene Rohrleitung 88 mit der Aufgabeeinrichtung 18 der Vorrichtung 12 staubdicht verbunden. Um die Gefahr einer gegebenenfalls unerwünschten Schwingungsübertragung von einer Vorrichtung zur anderen auszuschließen, ist die Rohrleitung 88 über flexible Muffen 90 an die Entnahmeeinrichtung 28 beziehungsweise die Aufgabeeinrichtung 18 angeschlossen.

Etwa in der Mitte zwischen den Muffen 90 ist die Rohrleitung 88 mit einem Abzweig 92 ausgebildet, wobei im Verbindungsbereich ein Stellglied 94 vorgesehen ist, um einen durch den oberen Teil der Rohrleitung 88 transportierten Materialstrom regel- und/oder steuerbar in den Abzweig 92 und/oder die Aufgabeeinrichtung 18 überzuleiten.

Auf diese Weise kann ein Teilstrom über den Abzweig 92 abgezogen werden.

In gleicher Weise wie vorstehend beschrieben ist auch die Verbindung zwischen der Vorrichtung 12 und der Vorrichtung 14 ausgebildet.

Die Aufgabeeinrichtung 16 der Vorrichtung 10 weist demgegenüber einen trichterförmigen Aufnahmebehälter auf, in den der zu behandelnde Materialstrom aufgegeben wird (Pfeil A). Der Aufnahmebehälter mündet über ein gemeinsames Anschlußstück 96 mit dem Aufnahmetrichter 84 in den Behandlungsraum 22 der Vorrichtung 10, wobei im Übergangsbereich zur Staubabdichtung eine Muffe 98 vorgesehen ist.

Die Entnahmeeinrichtung 32 der Vorrichtung 14 ist gleichfalls über eine flexible Muffe 100 an den Behandlungsraum 26 angeschlossen. Die Entnahmeeinrichtung 32 ist am Ende eines nach unten gerichteten Auswurfrohres 102 mit einem Auswurftrichter 104 versehen, über den der Materialstrom nach unten ausgetragen werden kann (Pfeil B).

Die Funktionsweise der erfindungsgemäßen Vorrichtung (Anlage) ist wie folgt:

In Pfeilrichtung A wird der zu trocknende und calcinierende Rauchgasgips in die Aufgabeeinrichtung 16 gegeben. Der Rauchgasgips hat zu diesem Zeitpunkt eine adsorptiv gebundene Oberflächenfeuchtigkeit von ca. 10 Gewichtsprozent und einen Kristallwassergehalt von ca. 20 Gewichtsprozent. Das Material gelangt von dort in den oberen Teil des Behandlungsraums 22 oberhalb des Bodens 40.

Der Boden 40 ist von unten gasdurchströmt, und zwar über die Brenner 56. Dabei reicht die kinetische Energie der über die Brenner ausgetragenen Brenngase aus, diese durch den Boden 40 zu führen. Die Einstellung erfolgt dabei so, daß das zu trocknende Material über den Boden 40 fließt, also nach einer zunächst agglomerierten Form aufgelockert wird. Der Transport der Teilchen von der Aufgabeeinrichtung 16 zur Entnahmeeinrichtung 28 über den Boden 40 erfolgt dabei einmal über die Schwingbewegung des Bodens 40, der vorzugsweise eine evolventenartige Bewegungsbahn mit geringer Amplitude beschreibt, zum anderen aber auch über die aus den Durchgangsöffnungen 46 ausströmende Verbrennungsluft. Je nach Einstellung kommt es dann auch zu einer Art periodischer Wurfbewegung der einzelnen Teilchen entlang des Bodens 40 in Richtung auf die Entnahmeeinrichtung 28. Durch die hohe Anzahl feinster Durchgangsöffnungen 46 ist eine gleichmäßige Durchströmung des Materialstromes mit heißer Verbrennungsluft möglich und damit eine intensive Trocknung. Der Materialteppich ist beispielsweise 2 bis 8 cm dick und bewegt sich oberhalb des Bodens 40 über diesen, wobei die einzelnen Teilchen bei den entsprechenden Schwingbewegungen des Bodens 40 in periodischen Abständen mit diesem in Berührung kommen und wieder abgestoßen werden.

Zur Einstellung der Strömungsgeschwindigkeit der Verbrennungsgase sind die Gasleitungen 105 zu den Brennern 56 mit Stellgliedern 106 ausgebildet.

Über die Saugeinrichtungen 70 wird nach oben die Abluft abgezogen und in die Entstaubungsanlage 66 geführt. Im Behandlungsraum 22 schwebende Feststoffteilchen werden dabei mitgeführt und in der Entstaubungsanlage 66 abgeschieden.

Wie die Zeichnung erkennen läßt, ist der Behandlungsraum 22 oberhalb des Bodens 40 zweigeteilt ausgebildet, und zwar durch eine vertikal verfahrbare Blende 108, der den Behandlungsraum 22 in Transportrichtung des Gutes 110 in zwei Abschnitte unterteilt, wobei die Blende 108 mit Abstand zum Boden 40 endet. Die Absaugeinrichtungen 70 sind so vorgesehen, daß sie den Raum vor und hinter der Blende 108 separat absaugen können.

Es können so Zonen unterschiedlicher Luftfeuchtigkeit und Temperatur eingestellt werden.

Der Materialstrom 110 verläßt die Vorrichtung 10 dann am ausgangsseitigen Ende und gelangt über die Rohrleitung 88 und die Aufgabeeinrichtung 18 in den Behandlungsraum 24. Das Material durchläuft dort in gleicher Weise wie vorstehend beschrieben über den Boden 42 und wird über die Entnahmeeinrichtung 30, über die Rohrleitung 88 und die Aufgabeeinrichtung 20 in den Behandlungsraum 26 geführt, wo sich der Vorgang nochmals wiederholt, bis schließlich das Material über die Entnahmeeinrichtung 32 sowie das Auswurfrohr 102/den Auswurftrichter 104 in Pfeilrichtung B abgeführt wird.

Das Material erfährt während seines Behandlungsweges eine unterschiedliche Trocknung/Calcinierung durch die über die Brenner 56, 58, 60 in den einzelnen Behandlungsräumen 22, 24, 26 eingestellten Temperaturen. Im vorliegenden Fall herrschen in der ersten Stufe (Vorrichtung 10) 400 bis 500°C Raumtemperatur, in der zweiten Stufe (Vorrichtung 12) 700 bis 800°C und in der dritten Stufe (Vorrichtung 14) bis zu 1200°C. Entsprechend wird in der ersten Stufe lediglich eine Trocknung (Entwässerung der adsorptiv gebundenen Feuchtigkeit) erreicht, während in den Stufen 2 und 3 eine zunehmende Calcinierung erfolgt.

So können in Abhängigkeit von der Temperatur und Verweildauer des Materials in den einzelnen Behandlungsräumen 22, 24, 26 (zu diesem Zweck sind auch die Böden 40, 42, 44 in ihrem Neigungswinkel verstellbar angeordnet) die Entwässerungsgrade eingestellt werden. Im dargestellten Ausführungsbeispiel ist dies so erfolgt, daß im Übergabebereich der Vorrichtung 10 zur Vorrichtung 12 ein Calciumsulfat-Dihydrat (zum Beispiel zur Herstellung von Alpha-, Beta-Halbhydrat) zur Verfügung steht, während im Übergangsbereich zwischen der zweiten und dritten Stufe das Material bereits bis zum sogenannten Beta-Halbhydrat entwässert ist. Am Ende der dritten Stufe kann Anhydrit II abgezogen werden.

Es erhöht die Nutzbarkeit der erfindungsgemäßen Einrichtung deutlich, wenn, wie in der Zeichnung dargestellt, die Rohrleitungen 88 mit über Stellglieder 94 verbundene Abzweige 92 ausgestattet sind, über die die entsprechenden Teilströme in beliebigen Mengen abgeführt werden können. Es kann so praktisch jedes beliebige Zwischenprodukt gewonnen werden.

Insbesondere im dargestellten Anwendungsbereich zur Calcinierung von Rauchgasgipsen können die Qualität und Wasserabbinde-Eigenschaften zusätzlich dadurch beeinflußt werden, — daß wie bei der Vorrichtung 10 dargestellt — Kammern unterschiedlicher Feuchtigkeitsgrade gebildet werden, wobei die Atmosphäre in den einzelnen Abschnitten auch durch Veränderung der Stellglieder 74 über die Menge der abgezogenen Verbrennungsgase beeinflußt wird.

Die erfindungsgemäße Vorrichtung beziehungsweise Anlage bietet somit eine Vielzahl von Möglichkeiten der Verfahrensführung und damit Beeinflussung der Produktqualität. Die Anlage ist sowohl zum ausschließlichen Trocknen, wie zum ausschließlichen Brennen, aber auch — wie dargestellt — zur Durchführung eines kontinuierlichen Trocknungs-/Brennverfahrens geeignet.

Anstelle der stufenweisen Anordnung verschiedener Vorrichtungen kann der Materialstrom auch mehrfach durch ein und dieselbe Vorrichtung über entsprechende Rückführleitungen geführt werden.

In einer alternativen Ausführungsform wird das Material dabei nicht mehrfach über denselben Boden geführt. Der Behandlungsraum ist vielmehr mit mehreren, übereinander und mit Abstand zueinander angeordneten gas-/luftdurchlässigen Böden ausgerüstet, wobei die Teilströme dann jeweils über entsprechende Entnahme- und Zuführeinrichtungen auf den nächsten Boden geleitet werden. Es ist möglich, bei einer zentralen Beheizung dieser Vorrichtung, innerhalb eines Behandlungsraums auf unterschiedlichen Niveaus unterschiedliche Temperatur- und Feuchtigkeitsprofile einzustellen, wozu dann vorzugsweise noch zwischen den einzelnen Böden auch zusätzliche Absaugeinrichtungen vorgesehen werden. Soweit erforderlich können zwischen den Böden auch zusätzliche Beheizungselemente und/oder Ventilatoren zur Unterstützung des Transportes der Verbrennungsluft, vorgehen werden. Eine weitere Energieeinsparung ergibt sich dabei ebenso, wie die Einsparung verschiedener Brenner und eine Reduzierung der Zahl der Zwangsagitatoren. Verschiedenen Böden können mit einem am Behandlungsraum angeordneten Vibrator in Schwingungen versetzt werden.

Anstelle der kompletten, anhand der Zeichnung dargestellten mehrstufigen Anlage können auch eine einfache Vorrichtung, oder eine mit mehreren Böden ausgebildete Vorrichtung, wie vorstehend beschrieben, auf Grund ihrer Kompaktheit und einfachen Handhabung ohne weiteres unmittelbar in einem Kraftwerk aufgestellt werden. Das an der Entnahmeeinrichtung 28 dann entnommene Produkt kann bei der ersten Anlage dann auf Grund seiner Entwässerung ohne weiteres transportiert und in einem Gipswerk weiter calciniert werden bzw. es liegt bei der letztgenannten Ausführungsform bereits ein verkaufsfähiges Endprodukt vor.

Die erfindungsgemäße Vorrichtung/Anlage eignet sich in gleicher Weise auch zum Trocknen/ Brenner gröberer pulverförmiger Materialien wie Naturgipsen.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Vorrichtung zum Trocknen und/oder Calcinieren von pulverförmigen Calciumsulfathydratprodukten mit mindestens einem, im wesentlichen horizontal verlaufenden, als Vibrations- oder Schwingboden ausgebildeten Boden mit einer Aufgabe- und Entnahmeeinrichtung für das Material, dadurch gekennzeichnet, daß der oder die Böden von unten mit Heißluft oder Heißgas durchströmbar ist (sind) und von der Entnahmeeinrichtung eine Transportverbindung zur zumindest teilweisen Überführung des Materialstromes zurück zur Aufgabeeinrichtung des ersten Boden verläuft.

2. Vorrichtung zum Trocknen und/oder Calcinieren von feinteiligen Chemie- und Rauchgasgipsen mit einem überwiegenden Kornanteil kleiner als 100 µm mit mindestens einem im wesentlichen horizontal verlaufenden, als Vibrations- oder Schwingboden ausgebildeten Boden (40, 42, 44), der von unten mit Heißluft oder Heißgas durchströmbar ist und mit mindestens einer Aufgabe (16, 18, 20) und Entnahmeeinrichtung (28, 30, 32) für das Material, wobei von der Entnahmeeinrichtung (28, 30, 32) eine Transportverbindung zur zumindest teilweisen Überführung des Materialstromes zurück zur Aufgabeeinrichtung (16, 18, 20) des ersten Bodens (40) und/oder zur Aufgabeeinrichtung zumindest eines im Abstand zum ersten Boden (40) angeordneten weiteren Bodens verläuft.

3. Vorrichtung nach Anspruch 1 oder 2, dadurch gekennzeichnet, daß innerhalb eines Behandlungsraums mehrere Böden übereinander und im Abstand zueinander angeordnet sind, und jeder Abschnitt des so unterteilten Behandlungsraums mit einer eigenen Aufgabe- und Entnahmeeinrichtung versehen ist, die zur zumindest teilweisen Rückführung des Materials von einem Abschnitt in den darunter- oder darüberliegenden mit Transportleitungen verbindbar sind.

4. Vorrichtung nach einem der Ansprüche 1 bis 3, gekennzeichnet durch eine Anordnung der Böden (40, 42, 44) in unterschiedlichen, im Abstand zueinander angeordneten Behandlungsräumen (10, 12, 14), wobei zwischen Entnahmeeinrichtung (28, 30) eines Behandlungsraums (22, 24) und Aufgabeeinrichtung (18, 20) eines daran angeschlossenen Behandlungsraumes (24, 26) eine Transportverbindung (88) für das zu behandelnde Material (110) besteht.

5. Vorrichtung nach Anspruch 4, dadurch gekennzeichnet, daß mindestens einer der Behandlungsräume (22, 24, 26) mit einer zusätzlichen Entnahmeeinrichtung (92) versehen ist.

6. Vorrichtung nach Anspruch 4 oder 5, dadurch gekennzeichnet, daß die zusätzliche Entnahmeeinrichtung (92) im Bereich der Transportverbindung (88) zwischen zwei Behandlungsräumen (22, 24; 24, 26) angeordnet ist.

7. Vorrichtung nach einem der Ansprüche 1 bis 6, dadurch gekennzeichnet, daß die einzelnen Böden/Behandlungsräume (22, 24, 26) stufenförmig gegeneinander versetzt angeordnet sind.

8. Vorrichtung nach einem der Ansprüche 1 bis 6, dadurch gekennzeichnet, daß die einzelnen Böden/Behandlungsräume übereinander angeordnet sind.

9. Vorrichtung nach einem der Anspruche 1 bis 8, dadurch gekennzeichnet, daß mindestens ein Boden (40) aus einem Metallblech mit einer Vielzahl feinster Durchgangsöffnungen (46) oder einem Metallsiebpaket besteht.

10. Vorrichtung nach einem der Ansprüche 1 bis 9, dadurch gekennzeichnet, daß mindestens ein Boden (42) aus einem gepreßten und/oder gesinterten Pulver- und/oder Granalienmaterial hoher und feiner Durchgangsporosität besteht.

11. Vorrichtung nach einem der Ansprüche 1 bis 10, dadurch gekennzeichnet, daß mindestens ein Boden (44) aud einem gebrannnten keramischen Merkstoff hoher Durchgangsporosität besteht.

12. Vorrichtung nach einem der Ansprüche 1 bis 11, dadurch gekennzeichnet, daß die Durchgangsoffnungen (46) und/oder Poren zumindest in dem dem zu behandelnden Gut (110) zugewandten Bereich gerichtet ausgebildet sind.

13. Vorrichtung nach einem der Ansprüche 1 bis 12, dadurch gekennzeichnet, daß der Behandlungsraum (22, 24, 26) zwischen Aufgabe- und Entnahmeeinrichtung (16, 18, 20; 28, 30, 32) in Zonen unterteilbar ist.

14. Vorrichtung nach Anspruch 13, dadurch gekennzeichnet, daß zwischen Aufgabe- und Entnahmeeinrichtung (16, 18, 20; 28, 30, 32) oberhalb des Bodens (40) in Richtung auf den Boden (40) vorzugsweise verfahrbare Bleuden (108) angeordnet sind.

15. Vorrichtung nach einem der Ansprüche 1 bis 14, dadurch gekennzeichnet, daß im oberen Abschnitt des Behandlungsraumes (22, 24, 26) oberhalb mindestens eines Bodens (40, 42, 44) mindestens eine, vorzugsweise regel- und/oder steuerbare Absaugeinrichtung (70) angeordnet ist.

16. Vorrichtung nach Anspruch 15, dadurch gekennzeichnet, daß an die Absaugeinrichtung (70) über zwischengeschaltete Transportleitungen (72, 68a, 68b, 68c, 68) eine Entstaubungsanlage (66) angeschlossen ist, von der aus eine Transportleitung (76), in deren Verlauf ein Ventilator (79) angeordnet ist, zu einem Schornstein (78) und mindestens eine weitere Transportleitung (80, 82) zur Aufgabe- und/oder Entnahmeeinrichtung (16, 18, 20; 28, 30, 32) verläuft.

17. Vorrichtung nach Anspruch 16, dadurch gekennzeichnet, daß von mindestens einer der Transportleitungen eine über eine Einrichtung zur Mengensteuerung angeschlossene Leitung (64) zu einem mit dem oder den Heißgaserzeugern (56, 58, 60) verbindbaren Wärmetauscher (62) führt.

18. Vorrichtung nach einem der Ansprüche 1 bis 17, dadurch gekennzeichnet, daß die Aufgabe-, Entnahmeeinrichtung (16, 18, 20; 28, 30, 32), deren Anschlußleitungen (80a, 80b, 82a, 82b) und/oder Rückführleitungen als Vibrations- und/oder Luftförderrinne, gegebenenfalls von unten mit Heißgasen beaufschlagt, ausgebildet sind.

19. Vorrichtung nach einem der Ansprüche 1 bis 18, dadurch gekennzeichnet, daß die Aufgabe- und/oder Entnahmeeinrichtungen (16, 18, 20; 28, 30, 32) sowie Rückfuhrleitungen (80a, 80b, 82a, 82b) staub- und/oder gasdicht mit dem Behandlungsraum (22, 24, 26) verbunden sind.

20. Vorrichtung nach einem der Ansprüche 1 bis 19, dadurch gekennzeichnet, daß ein oder mehrere Heißgaserzeuger (56, 58, 60) unterhalb der Böden (40, 42, 44) angeordnet sind.

21. Vorrichtung nach einem der Ansprüche 1 bis 20, dadurch gekennzeichnet, daß in der Grundplatte (36) des unteren Abschnittes des Behandlungsraumes (22, 24, 26) eine oder mehrere Öffnungen (54) und die Heißgaserzeuger (56, 58, 60) in geringem Abstand von außen vor diesen angeordnet sind.

22. Vorrichtung nach einem der Ansprüche 1 bis 21, dadurch gekennzeichnet, daß die Abschnitte mit eigenen Brennaggregaten-, Ablufteinrichtungen und/oder Ventilatoren ausgebildet sind.

23. Vorrichtung nach einem der Ansprüche 1 bis 22, dadurch gekennzeichnet, daß mindestens ein Boden (40, 42, 44) auf einer evolventartigen Bewegungsbahn pulsierend bewegbar ist.

24. Vorrichtung nach einem der Ansprüche 1 bis 23, dadurch gekennzeichnet, daß mindestens ein Boden (40, 42, 44) in seinem Neigungswinkel zum Behandlungsraum (22, 24, 26) einstellbar ist.

25. Vorrichtung nach einem der Ansprüche 1 bis 24, dadurch gekennzeichnet, daß jeder Boden (40, 42, 44) federnd im Behandlungsraum (22, 24, 26) gelagert und mit einem Zwangsagitator (38), wie einem Vibrator, ausgerüstet ist.

26. Vorrichtung nach einem der Ansprüche 1 bis 25, dadurch gekennzeichnet, daß der Behandlungsraum (22, 24, 26) insgesamt federnd gelagert und mit einem Zwangsagitator (38), wie einem Vibrator, ausgerüstet ist.

27. Vorrichtung nach einem der Ansprüche 1 bis 26, dadurch gekennzeichnet, daß die Rückführleitungen für die Abgase eines Behandlungsraumes (24, 26) in einen oder mehrere, in Transportrichtung des zu behandelnden Gutes (110) vorgeordnete Behandlungsräume (22, 24) führen.

28. Verwendung einer Vorrichtung nach einem der Ansprüche 1 bis 27 zur Wärmebehandlung von synthetischen Calciumsulfathydratprodukten, insbesondere solchen aus der Rauchgasentschwefelung von Kraftwerken, zum Trocknen und/oder Calcinieren in unterschiedlichen Entwässerungsstufen (Gipsphasen).

29. Verfahren zum Trocknen und/oder Calcinieren von feinteiligen Chemie- oder Rauchgasgipsen mit einem überwiegenden Kornanteil kleiner als 100 µm, dadurch gekennzeichnet, daß das zu behandelnde Material (110)

a) nacheinander mehrfach durch einen Behandlungsraum und dort über einen oder mehrere von unten mit Heißluft oder Heißgas durchströmte Böden oder

b) durch mehrere, in Transportrichtung des Materials hintereinander oder untereinander angeordnete derartige Behandlungsräume geführt wird, wobei der Boden (die Böden) kontinuierlich in Schwingung/Vibration mit kleiner Amplitude gehalten wird (werden), wobei der Materialstrom aufgrund der Schwingung/Vibration und/oder Luft-/Gasbeaufschlagung in einen fluidähnlichen Zustand gebracht wird.

30. Verfahren nach Anspruch 29, dadurch gekennzeichnet, daß das Material (110) beim Durchlaufen der hintereinander oder übereinander angeordneten Böden (40, 42, 44) mit steigenden Temperaturen beaufschlagt wird.

## Revendications

1. Installation pour le séchage et/ou la calcination de produits pulvérulents d'hydrates de sulfates de calcium avec au moins, pour l'essentiel, un plancher horizontal développé en tant que plancher de vibration ou d'oscillation avec une installation de livraison et une installation de réception caractérisée en ce que le ou les planchers est (sont) parcouru(s) par le bas par un courant d'air de chauffage ou de gaz de chauffage et qu'au moins une partie du courant de matières est ramenée partiellement de l'installation de réception par une liaison de transport vers l'installation de livraison du premier plancher.

2. Installation pour sécher et/ou calciner de fines particules de gypses chimiques et de fumées ayant une part dominante de grains de taille inférieure à 100 um avec au moins, pour l'essentiel, un plancher horizontal développé en tant que plancher de vibration ou d'oscillation (40, 42, 44), qui est parcouru par le bas par de l'air de chauffage ou du gaz de chauffage et avec au moins une installation de livraison (16, 18, 20) et une installation de réception (28, 30, 32) pour la matière, où au moins une partie du courant de matières est ramenée partiellement de l'installation de réception (28, 30, 32) par une liaison de transport vers l'installation de livraison (16, 18, 20) du premier plancher (40) et/ou au moins à l'installation d'un plancher placé plus loin que le premier plancher (40).

3. Installation selon la revendication 1 ou 2, caractérisée en ce que, à l'intérieur d'une enceinte de traitement, plusieurs planchers sont installés avec un écartement l'un au-dessus de l'autre et que chaque section de l'enceinte de traitement ainsi partagée est prévue avec une installation de livraison et une installation de réception, qui, pour ramener au moins une partie du matériel d'une section à celle qui se trouve en-dessous ou au-dessus, lui est reliée par une conduite de transport.

4. Installation selon l'une des revendications 1 à 3, caractérisée par une disposition des planchers (40, 42, 44) disposés dans des enceintes (10, 12, 14) différentes, écartées l'une de l'autre, où, entre l'installation de réception (28, 30) d'une installation de traitement (22, 24) et une installation de livraison (18, 20), une enceinte de traitement (24, 26), qui lui est rattachée, est pourvue d'une liaison de transport (88) pour la manipulation de la matière (110).

5. Installation selon la revendication 4, caractérisée en ce que au moins une des enceintes de traitement (22, 24, 26) est prévue avec une installation de réception supplémentaire (92).

6. Installation selon la revendication 4 ou 5, caractérisée en ce que l'installation de réception supplémentaire (92) est implantée dans la région de la liaison de transport (88) entre les deux enceintes de traitement (22, 24; 24, 26).

7. Installation selon l'une des revendications 1 à 6, caractérisée en ce que les planchers/enceintes de traitement unitaires (22, 24, 26) sont disposés de façon étagée, l'un par rapport à l'autre.

8. Installation selon l'une des revendications 1 à 6, caractérisée en ce que les planchers/enceintes de traitement sont disposés l'un au-dessus de l'autre.

9. Installation selon l'une des revendications 1 à 8, caractérisée en ce qu'au moins un plancher (40) est constitué d'une tôle en métal avec de nombreux petits trous (46) ou d'un paquet de passoires de métal.

10. Installation selon l'une des revendications 1 à 9, caractérisée en ce qu'au moins un plancher (42) est constitué d'une poudre pressée et/ou frittée et/ou d'une matière granuleuse de forte ou de faible porosité de passage.

11. Installation selon l'une des revendications 1 à 10, caractérisée en ce qu'au moins un plancher (44) est constitué par une matière céramique de forte porosité de passage.

12. Installation selon l'une des revendications 1 à 11, caractérisée en ce que les ouvertures de passage (46) et/ou les pores sont formés au moins en direction des zones où les produits à traiter (110) doivent être dirigés.

13. Installation selon l'une des revendications 1 à 12, caractérisée en ce que l'enceinte de traitement (22, 24, 26) est partagée en zones entre l'installation de livraison et l'installation de réception (16, 18, 20; 28, 30, 32).

14. Installation selon la revendication 13, caractérisée en ce qu'un écran réglable (108) est installé préférentiellement au-dessus du plancher (40) entre l'installation de livraison et l'installation de réception (16, 18, 20; 28, 30, 32) et orienté au-dessus du plancher (40).

15. Installation selon l'une des revendications 1 à 14, caractérisée en ce que, dans la partie supérieure des chambres de traitement (22, 24, 26), au moins un dispositif d'aspiration des gaz (70) de préférence pilotable et/ou réglable est installé au-dessus au moins d'un plancher (40, 42, 44).

16. Installation selon la revendication 15, caractérisée en ce qu'une installation de dépoussiérage (66) est reliée au dispositif d'aspiration (70) par des conduites de transport installées entre eux (72, 68a, 68b, 68c, 68) et de laquelle part une conduite de transport (76) vers une cheminée (78) et sur le trajet de laquelle se trouve installé un ventilateur (79) et au moins une autre conduite (80, 82) qui va en direction de l'installation de livraison et/ou l'installation de réception (16, 18, 20; 28, 30, 32).

17. Installation selon la revendication 16, caractérisée en ce qu'au moins une des conduites de transport va d'une conduite raccordée (64) à une installation de pilotage de débit à un échangeur de chaleur (62) relié à le ou les appareils de chauffage des gaz (56, 58, 60).

18. Installation selon l'une des revendications 1 à 17, caractérisée en ce que l'installation de livraison, de réception (16, 18, 20; 28, 30, 32), dont les conduites de raccordement (80a, 80b, 82a, 82b) et/ou les conduites de retour sont installées en tant que moyens de vibration et/ou de transfert à l'air, l'impact des gaz de chauffage s'effectuant vers le haut.

19. Installation selon l'une des revendications 1 à 18, caractérisée en ce que l'installation de livraison et l'installation de réception (16, 18, 20; 28, 30, 32), ainsi que les conduites de retour (80a, 80b, 82a, 82b) sont raccordées de manière étanche aux poussières et/ou au gaz, aux enceintes de traitement (22, 24, 26).

20. Installation selon l'une des revendications 1 à 19, caractérisée en ce que plusieurs appareils de chauffage de gaz (56, 58, 60) sont installés sous le plancher (40, 42, 44).

21. Installation selon l'une des revendications 1 à 20, caractérisée en ce que la plaque de base (36) de la partie inférieure de l'enceinte de traitement (22, 24, 26) est munie d'ouvertures (54) et que les appareils de chauffage des gaz (56, 58, 60) sont installés à l'extérieur, à peu de distance.

22. Installation selon l'une des revendications 1 à 21, caractérisée en ce que les sections sont réalisées avec leurs propres appareils de calcination, installation d'évacuation des gaz perdus et/ou ventilateur.

23. Installation selon l'une des revendications 1 à 22, caractérisée en ce qu'au moins un plancher (40, 42, 44) est mobile suivant un profil de mouvement en forme de développante.

24. Installation selon l'une des revendications 1 à 23, caractérisée en ce que au moins un plancher (40, 42, 44) est réglable, dans son inclinaison, par rapport à l'enceinte de traitement (22, 24, 26).

25. Installation selon l'une des revendications 1 à 24, caractérisée en ce que chaque plancher (40, 42, 44) est monté élastiquement dans l'enceinte de traitement (22, 24, 26) et est équipé d'un agitateur forcé (38) tel qu'un vibreur.

26. Installation selon l'une des revendications 1 à 25, caractérisée en ce que l'enceinte de traitement (22, 24, 26) dans son ensemble est installée élastiquement et équipée d'un agitateur forcé (38) tel qu'un vibreur.

27. Installation selon l'une des revendications 1 à 26, caractérisée en ce que les conduites de retour des gaz de l'une des enceintes de traitement (24, 26) conduisent à une ou plusieurs des enceintes de traitement qui la précèdent (22, 24) dans le sens de transport du produit.

28. Utilisation d'une installation selon l'une des revendications 1 à 27, pour le traitement de produits sulfo-hydrates de calcium synthétiques, en particulier des produits tels que ceux provenant de la désulfuration des fumées de centrales thermiques devant être séchés et/ou calcinés à différents stades d'assèchement (phase de gypses).

29. Procédé pour le séchage et/ou la calcination de fines particules de gypse chimique ou gypse de fumée avec une teneur prépondérante de particules plus petites que 100 um, caractérisé ence que la matière à traiter (110) est conduite:

a) plusieurs fois, l'une après l'autre, à travers une enceinte de traitement au-dessus d'un ou plusieurs courants d'air de chauffage ou gaz de chauffage traversant un plancher, ou

b) à travers plusieurs enceintes de ce type placées dans le sens de circulation des matières l'une après l'autre ou l'une au-dessus de l'autre où le plancher (les planchers) est (sont) maintenu(s) continuellement en mouvement selon une oscillation/vibration de faible amplitude où le courant de matières, en raison de l'oscillation/vibration et/ou de l'impact vertical de l'air/ du gaz se trouve dans un état semblable à une fluidisation.

30. Procédé selon la revendication 29, caractérisé en ce que la matière (110), par son passage sur les planchers successifs placés l'un après l'autre, ou l'un au-dessus de l'autre (40, 42, 44), s'effrite avec l'augmentation de la température.

**Claims**

1. A device for drying and/or calcining powdery calcium sulfate hydrate products, comprising at least one essentially horizontal base, being adapted to vibrate or oscillate with feed and withdrawal mechanism means for said material characterized in that said base(s) as/are adapted to have hot air or hot gas flow therethrough from below; and transport means are provided for conveying at least part of a stream of said material back from said withdrawal mechanism means to said feed mechanism means of the first base.

2. A device for drying and/or calcining fine chemical and/or desulfurization gypsum that predominantly has a grain size of less than 100 μm with at least one essentially horizontal base (40, 42, 44) being adapted to vibrate or oscillate and adapted to have hot air or hot gas flow therethrough from below and with at least one feed mechanism means (16, 18, 20) and at least one withdrawal mechanism means (28, 30, 32) for the material, a transport means being arranged for transportation of at least part of a stream of said material from the withdrawal mechanism means (28, 30, 33) back to the feed mechanism means (16, 18, 20) of the first base (40) and/or to the feed mechanism means of at least one additional base, being arranged in distant relationship to said first base (40).

3. A device according to claim 1 or 2, characterized in that within one treatment area several bases are disposed, being spaced from one another one above the other to divide said treatment area into sections, with each of which is associated a respective feed and withdrawal mechanism that are connectable to transport lines for at least partial return of material from one section to another section arranged above or below it.

4. A device according to one of claims 1 to 3, characterized in that said bases (40, 42, 44) are arranged in different treatment areas (10, 12, 14) that are spaced from one another with a respective transport connection (88) for the material that is to be treated, linking the withdrawal mechanism means (28, 30) of one treatment area (22, 24) with the feed mechanism means (18, 20) of the following treatment area.

5. A device according to claim 4, characterized in that at least one of said treatment areas (22, 24, 26) is provided with a supplemental withdrawal means (92).

6. A device according to claim 4 or 5, characterized in that said supplemental withdrawal means (92) is disposed in the region of said transport connection (88) between two of said treatment areas (22, 24; 24, 26).

7. A device according to one of claims 1 to 6, characterized in that said treatment area means (22, 24, 26), i.e. said bases thereof, are arranged in a stepwise manner.

8. A device according to one of claims 1 to 6, characterized in that said treatment area means, i.e. said bases thereof, are arranged one above the other.

9. A device according to one of claims 1 to 8, characterized in that at least one of said bases (40) comprises a metal sheet that is provided with a plurality of very fine openings (46) or a metal screen unit.

10. A device according to one of claims 1 to 9, characterized in that at least one of said bases (42) consists of a compressed and/or sintered powdery and/or granulated material of high and fine porosity.

11. A device according to one of claims 1 to 10, characterized in that at least one of said bases (44) consists of a fired ceramic material of high open porosity.

12. A device according to one of claims 1 to 11, characterized in that the openings and/or pores are oriented in at least that part of the base that faces the material to be treated.

13. A device according to one of claims 1 to 12, characterized in that said treatment area means (22, 24, 26) is adapted to be divided into zones between said feed mechanism means (16, 18, 20) and said withdrawal mechanism means (28, 30 32) thereof.

14. A device according to claim 13, characterized in that plates are disposed above said base (40), between said feed mechanism means (16, 18, 20) and said withdrawal mechanism means (28, 30, 32) and preferably movable toward said base (40).

15. A device according to one of claims 1 to 14, characterized in that at least one suction mechanism (70) that is preferably regulatable and/or controllable is aranged in the upper section of said treatment area means (22, 24, 26) above at least one of said bases (40, 42, 44).

16. A device according to claim 15, characterized in that a dust collection unit (66) is connected to said suction mechanism (70) via transport lines (72, 68a, 68b, 68c, 68); and a transport line (76) that leads to a flue (78), with a fan (79) is disposed in said transport line (76); running from said dust collection unit (66) and which includes at least one further transport line (80, 82) that leads to said feed mechanism means (16, 18, 20) and/or to said withdrawal mechanism means (28, 30, 32).

17. A device according to claim 16, characterized in that one line means, which is connected to a quantity control system, leads from at least one of said transport lines to a heat exchanger (62), being connectable to hot-gas generating means (56, 58, 60).

18. A device according to one of claims 1 to 17, characterized in that said feed mechanism means (16, 18, 20), withdrawal mechanism means (28, 30, 32), connecting lines (80a, 80b, 82a, 82b) and/or return lines thereof, are embodied as vibration and/or airconveyer chutes, to which hot gases can be supplied from below.

19. A device according to one of claims 1 to 18, characterized in that said feed mechanism means (16, 18, 20), withdrawal mechanism means (28, 40, 32), and/or return lines (80a, 80b, 82a, 82b) thereof are connected to said treatment area means (22, 24, 26) in a dusttight and/or gastight manner.

20. A device according to one of claims 1 to 19, characterized in that one or several of said hot-gas-generating means (56, 58, 60) are disposed below said bases (40, 42, 44).

21. A device according to one of claims 1 to 20, characterized in that said treatment area means (22, 24, 26) has a lower section with said lower section having a bottom (36) that is provided with one or more openings (54), with said hot gas-generating means (56, 58, 60) being disposed externally of said treatment area means at a slight distance in front of said opening means.

22. A device according to one of claims 1 to 21, characterized in that said sections are provided with their own burner units, exhaust air mechanisms, and/or fans.

23. A device according to one of claims 1 to 22, characterized in that at least one base (40, 42, 44) is pulsatingly movable along an involute path of movement.

24. A device according to one of claims 1 to 23, characterized in that at least one base is adjustable in its angle of inclination relative to said treatment area means (22, 24, 26).

25. A device according to one of claims 1 to 24, charaterized in that each of said bases (40, 42, 44) is elastically supported in said treatment area means (22, 24, 26) and is provided with a forced agitator (38), such as a vibrator.

26. A device according to one of claims 1 to 25, characterized in that said treatment area means (22, 24, 26) as a whole is elastically supported and is provided with a forced agitator (38) such as a vibrator.

27. A device according to one of claims 1 to 26, characterized in that return lines for exhaust gases from said treatment area (24, 26) lead to one or more of the preceding upstream ones of said treatment areas.

28. Use of a device according to one of claims 1 to 27, and intended for heat treating synthetic calcium sulfate hydrate products, especially those produced during flue gas desulfurization in power plants, for drying and/or calcining in different degrees of dehydration/gypsum phases.

29. A method of drying and/or calcining finely divided chemical or desulfurization gypsum that predominantly has a grain size of less than 100 μm, characterized by conveying said material (110)

a) several times through a given treatment area means and along or more bases, with hot air or hot gas flowing therethrough from below or

b) through several treatment areas disposed one after the other or one above the other with respect to the transport direction of the material with said base means being continuously oscillated or vibrated at low amplitude, thereby fluidizing the stream of material over said base means by said oscillation/ vibration and/or air/ gas-pressure.

30. A method according to claim 29, characterized in that said material (110) is subjected to rising temperatures while passing the several bases, arranged one after or one above the other.